(19) Europäisches Patentamt
European Patent Office
Office européen des brevets

(11) **EP 4 286 328 A1**

(12) # EUROPEAN PATENT APPLICATION
published in accordance with Art. 153(4) EPC

(43) Date of publication:
**06.12.2023 Bulletin 2023/49**

(21) Application number: **22745816.3**

(22) Date of filing: **24.01.2022**

(51) International Patent Classification (IPC):
$C01B\ 33/02\ ^{(2006.01)}$    $H01M\ 4/36\ ^{(2006.01)}$
$H01M\ 4/38\ ^{(2006.01)}$

(52) Cooperative Patent Classification (CPC):
**C01B 33/02; H01M 4/36; H01M 4/38; Y02E 60/10**

(86) International application number:
**PCT/JP2022/002484**

(87) International publication number:
**WO 2022/163595 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021 JP 2021013582**

(71) Applicant: **Panasonic Intellectual Property
Management Co., Ltd.
Osaka 571-0057 (JP)**

(72) Inventors:
• **INOUE Kaoru
Kadoma-shi, Osaka 571-0057 (JP)**
• **SAKATA Motohiro
Kadoma-shi, Osaka 571-0057 (JP)**
• **TANIGUCHI Akihiro
Kadoma-shi, Osaka 571-0057 (JP)**

(74) Representative: **Novagraaf International SA
Chemin de l'Echo 3
1213 Onex, Geneva (CH)**

(54) **NEGATIVE ELECTRODE ACTIVE MATERIAL FOR SECONDARY BATTERIES, AND
SECONDARY BATTERY**

(57)    Provided is a negative electrode active material for secondary batteries that is capable of inhibiting negative electrode swelling and the decline of the charge/discharge cycle characteristics of a battery. A negative electrode active material for secondary batteries according to the present disclosure is characterized by including a Si-based material, activated carbon, and a conductive material, and in that the Si-based material and the conductive material are carried in pores of the activated carbon.

**EP 4 286 328 A1**

**Description**

TECHNICAL FIELD

The present disclosure relates to a negative electrode active material for secondary batteries and to a secondary battery.

BACKGROUND

Si-based materials are alloying materials to be alloyed with lithium. It is known that a Si-based material can occlude a larger amount of lithium ions per unit volume than a carbon-based active material such as graphite, and Si-based materials are expected to be used in a negative electrode active material of a secondary battery.

For example, Patent Literature 1 discloses a negative electrode active material including a Si-based material, a porous carbon aerogel, a binder material, and a carbon active material.

CITATION LIST

PATENT LITERATURE

Patent Literature 1: JP 2019-536234 A

SUMMARY

TECHNICAL PROBLEM

Si-based materials have a large volume change (expansion/contraction) during charge and discharge, and therefore have problems such as deterioration of the safety of the battery caused by swelling of the negative electrode, and deterioration of charge-discharge cycle characteristics caused by deterioration of the conductivity of the negative electrode.

Therefore, an object of the present disclosure is to provide a negative electrode active material for secondary batteries that is capable of suppressing swelling of a negative electrode and deterioration of charge-discharge cycle characteristics of a battery.

SOLUTION TO PROBLEM

A negative electrode active material for secondary batteries of an aspect of the present disclosure includes a Si-based material, activated carbon, and a conductive agent, and the Si-based material and the conductive agent are supported in pores of the activated carbon.

A secondary battery of an aspect of the present disclosure includes a negative electrode including the negative electrode active material for secondary batteries.

ADVANTAGEOUS EFFECTS OF INVENTION

According to the present disclosure, a negative electrode active material for secondary batteries can be provided that is capable of suppressing swelling of a negative electrode and deterioration of charge-discharge cycle characteristics of a battery.

BRIEF DESCRIPTION OF DRAWING

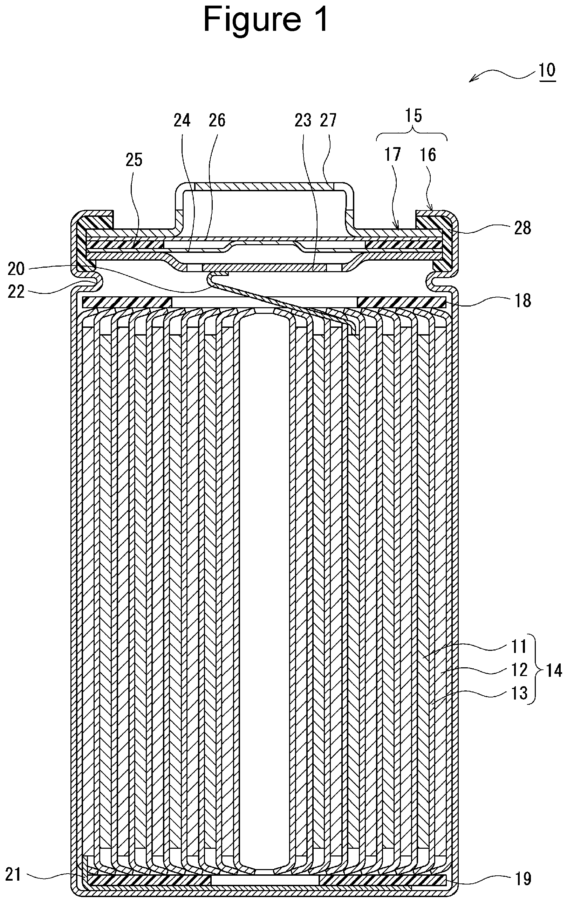

FIG. 1 is a sectional view of a secondary battery of an example of an embodiment.

DESCRIPTION OF EMBODIMENTS

A negative electrode active material for secondary batteries of an aspect of the present disclosure includes a Si-based material, activated carbon, and a conductive agent, and the Si-based material and the conductive agent are supported in pores of the activated carbon. According to the present disclosure, the volume change of the Si-based material caused by charge and discharge occurs in pores of the activated carbon, and therefore expansion of the Si-based material is less likely to lead to swelling of the negative electrode. Furthermore, the conductive agent supported together with the Si-based material in pores of the activated carbon secures a conductive path of the Si-based material, and therefore deterioration of charge-discharge cycle characteristics of the battery is suppressed.

Hereinafter, embodiments of the negative electrode active material for secondary batteries and the secondary battery according to the present disclosure will be described in detail with reference to the drawing.

FIG. 1 is a sectional view of a secondary battery of an example of an embodiment. A secondary battery 10 shown in FIG. 1 includes a wound electrode assembly 14 in which a positive electrode 11 and a negative electrode 12 are wound with a separator 13 interposed therebetween, a non-aqueous electrolyte, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (laminated batteries) formed by lamination with a resin sheet.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side part of the case body 16 protrudes inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are stacked in this order from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central parts, and the insulating member 25 is interposed between the circumferential parts of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the inner surface of the bottom of the case body 16 by welding or the like, and the case body 16 serves as a negative electrode terminal.

Hereinafter, the positive electrode 11, the negative electrode 12, the separator 13, and the non-aqueous electrolyte included in the secondary battery 10 will be described in detail.

[Positive Electrode]

The positive electrode 11 includes, for example, a positive electrode current collector and a positive electrode mixture layer formed on the positive electrode current collector. As the positive electrode current collector, a foil of a metal, such as aluminum or an aluminum alloy, that is stable in a potential range of the positive electrode, a film in which the metal is disposed on its surface layer, or the like can be used. The positive electrode mixture layer includes, for example, a positive electrode active material, a binder, a conductive agent, and the like. The positive electrode mixture layer is preferably formed on both surfaces of the positive electrode current collector. The positive electrode 11 can be manufactured by, for example, applying a positive electrode mixture slurry including a positive electrode active material, a binder, a conductive agent, and the like to a positive electrode current collector, and drying and rolling the applied film to form a positive electrode mixture layer on both surfaces of the positive electrode current collector.

As the positive electrode active material, for example, a lithium-transition metal composite oxide is used. Examples of the metal element included in the lithium-transition metal composite oxide include Ni, Co, Mn, Al, B, Mg, Ti, V, Cr, Fe, Cu, Zn, Ga, Sr, Zr, Nb, In, Sn, Ta, and W. Among them, at least one of Ni, Co, or Mn is preferably included.

Examples of the conductive agent included in the positive electrode mixture layer include carbon materials such as carbon black, acetylene black, Ketjenblack, graphene, carbon nanotubes, and graphite. Examples of the binder included in the positive electrode mixture layer include fluororesins such as polytetrafluoroethylene (PTFE) and polyvinylidene fluoride (PVDF), polyacrylonitrile (PAN), polyimides, acrylic resins, polyolefins, carboxymethylcellulose (CMC) and its salts, and polyethylene oxide (PEO).

[Negative Electrode]

The negative electrode 12 includes, for example, a negative electrode current collector and a negative electrode mixture layer formed on the current collector. As the negative electrode current collector, for example, a foil of a metal, such as copper or a copper alloy, that is stable in a potential range of the negative electrode, a film in which the metal is disposed on its surface layer, or the like can be used. The negative electrode mixture layer includes a negative electrode active material. The negative electrode mixture layer may further include a binder, a conductive agent, and the like. The negative electrode 12 can be manufactured by, for example, applying a negative electrode mixture slurry including a negative electrode active material and the like to a negative electrode current collector, and drying and rolling the applied film to form a negative electrode mixture layer on both surfaces of the negative electrode current collector.

The negative electrode active material includes activated carbon, and a Si-based material and a conductive agent supported in pores of the activated carbon. It is desirable that all of the Si-based material and the conductive agent be supported in pores of the activated carbon, but the Si-based material and the conductive agent may be partially supported on the surface of the activated carbon.

The method of supporting the Si-based material and the conductive agent in pores of the activated carbon is not particularly limited, and examples of the method include a method in which the activated carbon is immersed in a slurry obtained by dispersing the Si-based material and the conductive agent in an organic solvent. In this method, the slurry enters pores of the activated carbon due to the capillary phenomenon, and the Si-based material and the conductive agent are supported in the pores. It is desirable to heat or degas the slurry from the viewpoint that the Si-based material and the conductive agent are easily supported in pores. Furthermore, the Si material and the conductive agent can be supported in pores of the activated carbon with a cold isostatic pressing method (CIP method). Specifically, the activated carbon is added to a slurry obtained by dispersing the Si-based material and the conductive agent in an organic solvent to produce a mixture, and the mixture is put into a rubber bag and pressurized using a hydraulic medium such as water, and thus the slurry is injected into pores of the activated carbon. The Si amount and the conductive agent amount in pores of the activated carbon can be adjusted by controlling the Si content and the conductive agent content in the slurry. It is also possible to combine the immersion using the capillary phenomenon and the CIP method described above.

<Activated Carbon>

The activated carbon mainly functions as a carrier on which the Si-based material and the conductive agent are supported. Activated carbon has a porous structure including a large number of pores. Pores of activated carbon are classified into micropores, mesopores, and macropores according to the pore size. Micropores refer to pores having a pore size of less than or equal to 2 nm, mesopores refer to pores having a pore size of greater than 2 nm and less than or equal to 50 nm, and macropores refer to pores having a pore size of greater than 50 nm.

The raw material of the activated carbon is not particularly limited, and for example, a known raw material can be used such as a carbide of a coconut husk, bamboo, wood, or the like (that is, coconut husk charcoal, bamboo charcoal, charcoal, or the like) or coal. Among these raw materials, a carbide having high hardness, such as coconut husk charcoal or bamboo charcoal, is preferably used. The method of activation to obtain the activated carbon is not particularly limited, and for example, a known activation method can be used such as a gas activation method in which a gas such as water vapor or carbon dioxide is used for treatment at a high temperature, or a chemical activation method in which zinc chloride, phosphoric acid, concentrated sulfuric acid, or the like is used for treatment.

The particle form of the activated carbon is not particularly limited, and the activated carbon may have a particle shape such as a powder shape, a particulate shape, or a granular shape, or may have a fiber shape.

The total pore volume (total of the micropore volume, the mesopore volume, and the macropore volume) of the activated carbon is preferably greater than or equal to 0.5 mL/g and less than or equal to 2.5 mL/g, and more preferably greater than or equal to 0.7 mL/g and less than or equal to 2.2 mL/g from the viewpoint that, for example, a sufficient Si-based material and a sufficient conductive agent can be supported in pores. The macropore volume of the activated carbon is preferably greater than or equal to 1.0 mL/g and less than or equal to 2.1 mL/g, and more preferably greater than or equal to 1.2 mL/g and less than or equal to 2.0 mL/g from the viewpoint that the Si-based material and the conductive agent are easily supported in pores. The micropore distribution and the mesopore distribution of the activated carbon are calculated using the BJH method with the adsorption curve of the nitrogen adsorption isotherm. The macropore distribution is determined using mercury intrusion porosimetry.

The activated carbon preferably has macropores having an average pore size of greater than or equal to 0.5 $\mu$m and less than or equal to 2.5 $\mu$m, and more preferably greater than or equal to 1 $\mu$m and less than or equal to 2 $\mu$m from the viewpoint that the Si-based material and the conductive agent are easily supported in pores.

The specific surface area of the activated carbon may be, for example, less than or equal to 2000 $m^2/g$, or less

than 1700 m²/g, and may be greater than or equal to 1000 m²/g, or greater than or equal to 1100 m²/g. The specific surface area of the activated carbon may be, for example, greater than or equal to 1000 m²/g and less than or equal to 2000 m²/g. The specific surface area of the activated carbon can be measured with the BET method.

The average particle size of the activated carbon may be, for example, greater than or equal to 10 $\mu$m, greater than or equal to 30 $\mu$m, or greater than or equal to 40 $\mu$m, and may be less than or equal to 100 $\mu$m, less than or equal to 70 $\mu$m, or less than or equal to 60 $\mu$m. The average particle size of the activated carbon may be greater than or equal to 10 $\mu$m and less than or equal to 100 $\mu$m, greater than or equal to 40 $\mu$m and less than or equal to 70 $\mu$m, or greater than or equal to 30 $\mu$m and less than or equal to 60 $\mu$m. The average particle size can be measured with a laser diffraction/scattering method.

<Si-Based Material>

The Si-based material is not particularly limited as long as it can reversibly occlude and release ions such as lithium ions, and examples of the Si-based material include Si particles, alloy particles containing Si, and composite particles containing Si. These may be used singly, or greater than or equal to two of them may be used in combination.

The Si particles can be obtained, for example, using a gas phase method or by grinding silicon swarf finely, and whichever method is used for manufacturing Si particles, the Si particles can be used. Examples of the alloy particles containing Si include alloys containing Si and a metal selected from alkali metals, alkaline earth metals, transition metals, rare earth metals, and combinations thereof. The composite particles containing Si include, for example, a lithium ion conductive phase and Si particles dispersed in the lithium ion conductive phase. The lithium ion conductive phase is, for example, at least one selected from a silicon oxide phase, a silicate phase, and a carbon phase.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among the silicate phases, a silicate phase including lithium (hereinafter, sometimes referred to as lithium silicate phase) is preferable from the viewpoints of high lithium ion conductivity and the like.

The lithium silicate phase is represented by, for example, the formula: $Li_{2z}SiO_{2+z}$ ($0 < z < 2$). From the viewpoints of stability, ease of production, lithium ion conductivity, and the like, z preferably satisfies the relation of $0 < z < 1$, and more preferably $z = 1/2$.

The composite particles in which Si particles are dispersed in a silicon oxide phase is represented by, for example, a general formula $SiO_x$ (in which x is preferably in the range of $0 < x < 2$, and more preferably in the range of $0.5 \leq x \leq 1.6$). The composite particles in which Si particles are dispersed in a carbon phase is represented by, for example, a general formula SixC1y (in which x and y are preferably in the ranges of $0 < x \leq 1$ and $0 < y < 1$, and more preferably in the ranges of $0.3 \leq x \leq 0.45$ and $0.7 \leq y \leq 0.55$).

The content of the Si-based material is, for example, such that the ratio of the volume of the Si-based material to the total pore volume of the activated carbon is preferably greater than or equal to 20% and less than or equal to 40%, and more preferably greater than or equal to 25% and less than or equal to 35%, from the viewpoints of increasing the capacity of a battery, suppressing swelling of a negative electrode, and the like.

The average particle size of the Si-based material is, for example, preferably greater than or equal to 10 nm and less than or equal to 500 nm, more preferably greater than or equal to 20 nm and less than or equal to 200 nm, and still more preferably greater than or equal to 50 nm and less than or equal to 100 nm, for example, from the viewpoint that the Si-based material is easily supported in pores of the activated carbon.

The Si-based material preferably has a particle surface on which a conductive film including a material having high conductivity is formed. Examples of the conductive film include carbon films, metal films, and metal compound films, and a carbon film is preferable from the viewpoints of electrochemical stability and the like. The carbon film can be formed with, for example, a CVD method in which acetylene, methane, or the like is used, a method in which coal pitch, petroleum pitch, a phenol resin, or the like is mixed with a silicon-based active material and the mixture is heat-treated, or the like. The conductive film may also be formed by fixing a conductive filler such as carbon black to the particle surface of the Si-based material using a binder.

The activated carbon in which the Si-based material and the conductive agent are supported in pores preferably has a surface on which a conductive film is formed, similarly. Examples of the conductive film include carbon films, metal films, and metal compound films, and a carbon film is preferable from the viewpoints of electrochemical stability and the like.

<Conductive Agent>

Examples of the conductive agent include carbon black, acetylene black, Ketjenblack, graphite, and carbon nanotubes. Among them, for example, carbon nanotubes are preferable from the viewpoint that deterioration of charge-discharge cycle characteristics of a battery can be suppressed while the amount of the conductive agent added is limited. Examples of the carbon nanotubes include single-walled carbon nanotubes, double-walled carbon nanotubes, and multi-walled carbon nanotubes. Among them, for example, single-walled carbon nanotubes are preferable from the viewpoint that deterioration of charge-discharge cycle characteristics of a battery can be further suppressed. Note that a single-walled carbon nanotube (SWCNT) is a carbon nanostructure in which one graphene sheet forms one cylindrical shape, a double-walled carbon nanotube is a carbon nanostructure in which two graphene sheets are concentrically layered to form one cylindrical shape, and a multi-walled carbon nanotube is a carbon nanostructure in which greater than or equal to three graphene sheets are concentrically layered to form one cylindrical shape. The term "graphene sheet" refers to a layer in which a carbon atom in an sp2 hybrid orbital forming a crystal of graphite is located at an apex of a regular hexagon. The shape of the carbon nanotube is not limited. Examples of the shape include various forms including needle shapes, cylindrical tube shapes, fishbone shapes (fishbone or cup-stacked type), trump shapes (platelets), and coil shapes.

The content of the conductive agent may be, for example, greater than or equal to 0.01 mass% and less than or equal to 1.0 mass% based on the mass of the Si-based material.

The negative electrode active material may contain a known negative electrode active material such as a carbon material that electrochemically occludes and releases lithium ions, in addition to the activated carbon in which the Si-based material and the conductive agent are supported in pores. The content of the negative electrode active material may be, for example, greater than or equal to 85 mass%, greater than or equal to 90 mass%, or greater than or equal to 95 mass% based on the total amount of the negative electrode mixture layer.

Examples of the binder include the binders exemplified for the positive electrode 11. The content of the binder is, for example, preferably greater than or equal to 0.5 mass% and less than or equal to 10 mass%, and more preferably greater than or equal to 1 mass% and less than or equal to 5 mass% based on the total amount of the negative electrode mixture layer.

[Separator]

As the separator 13, a porous sheet having an ion permeation property and an insulating property is used. Specific examples of the porous sheet include fine porous thin films, woven fabrics, and nonwoven fabrics. As the material of the separator 13, olefin-based resins such as polyethylene, polypropylene, and copolymers containing at least one of ethylene or propylene, cellulose, and the like are suitable. The separator 13 may have a single-layered structure or a multilayered structure. On the surface of the separator 13, a heat-resistant layer or the like may be formed.

[Non-aqueous Electrolyte]

The non-aqueous electrolyte includes a non-aqueous solvent and an electrolyte salt. The non-aqueous electrolyte is not limited to a liquid electrolyte, and may be a solid electrolyte in which a gel polymer or the like is used. As the electrolyte salt, for example, a lithium salt such as LiFSI, LiTFSI, $LiBF_4$, or $LiPF_6$ is used. As the solvent, for example, an ester such as ethylene carbonate (EC), propylene carbonate (PC), dimethyl carbonate (DMC), ethyl methyl carbonate (EMC), diethyl carbonate (DEC), methyl acetate (MA), or methyl propionate (MP), an ether, a nitrile, an amide, or a mixed solvent of greater than or equal to two kinds thereof is used. The non-aqueous solvent may contain a halogen-substituted product in which at least a part of hydrogen in a solvent described above is substituted with a halogen atom such as fluorine.

Examples of the halogen-substituted product include fluorinated cyclic carbonic acid esters such as fluoroethylene carbonate (FEC), fluorinated chain carbonic acid esters, and fluorinated chain carboxylic acid esters such as methyl fluoropropionate (FMP).

EXAMPLES

Hereinafter, the present disclosure will be further described with reference to Examples, but the present disclosure is not limited to these Examples.

<Example 1>

Silicon swarf was used as a raw material and ground to produce Si particles having a particle size greater than or equal to 50 nm and less than or equal to 100 nm. The Si particles and acetylene black (AB) as a conductive agent were mixed at a mass ratio of 100 : 0.5. The resulting mixture was dispersed in a propylene carbonate solvent (PC solvent) to prepare a slurry. Subsequently, the slurry was added to activated carbon (macropores: pore size greater than or equal to 1 $\mu$m and less than or equal to 2 $\mu$m, total pore volume: 1.5 mL/g) so that the ratio of the volume of Si to the total pore volume of the activated carbon was 33%, and then the resulting product was press-molded with a CIP method to produce a negative electrode active material in which the Si-based material and the conductive agent were supported in pores of the activated carbon.

The negative electrode active material, sodium carboxymethylcellulose, and styrene butadiene rubber were mixed at a mass ratio of 100 : 1.3 : 1.0, and an appropriate amount of water was added to adjust a negative electrode slurry. The negative electrode slurry was applied to both surfaces of a negative electrode current collector made of a copper foil, and the applied film was dried and then rolled with a roller to produce a negative electrode in which a negative electrode mixture layer was formed on both surfaces of the negative electrode current collector.

A Lithium-transition metal composite oxide having a composition of $LiNi_{0.88}Co_{0.09}Al_{0.03}O_2$, acetylene black, and polyvinylidene fluoride were mixed at a mass ratio of 100 : 0.75 : 0.6, and then N-methyl-2-pyrrolidone (NMP) was added to prepare a positive electrode slurry. This slurry was applied to both surfaces of an aluminum foil, and the applied film was dried and then rolled with a roller to produce a positive electrode in which a positive electrode mixture layer was formed on both surfaces of a positive electrode current collector.

[Non-aqueous Electrolyte Liquid]

In a mixed solvent obtained by mixing ethylene carbonate (EC), dimethyl carbonate (DMC), and methyl acetate (MA) at a volume ratio of 20 : 40 : 40, $LiPF_6$ was dissolved at a ratio of 1.2 mol/L to prepare a non-aqueous electrolyte liquid.

[Test Cell]

The positive electrode and the negative electrode were stacked so as to face each other with a separator interposed therebetween, and the resulting product was wound to produce an electrode assembly. Next, the electrode assembly and the non-aqueous electrolyte liquid were housed in a bottomed cylindrical battery case body, the non-aqueous electrolyte liquid was injected, and then the opening of the battery case body was sealed with a gasket and a sealing assembly to produce a test cell.

<Example 2>

A test cell was produced in the same manner as in Example 1, except that Si particles having a surface on which a carbon film was formed were used.

<Example 3>

A test cell was produced in the same manner as in Example 2, except that a single-walled carbon nanotube (SWCNT) was used as a conductive agent, and that the Si particles and the single-walled carbon nanotube (SWCNT) were mixed at a mass ratio of 100 : 0.01.

<Example 4>

A test cell was produced in the same manner as in Example 3, except that a carbon film was formed on the surface of the activated carbon in which the Si-based material and the conductive agent were supported in pores.

<Comparative Example 1>

A test cell was produced in the same manner as in Examples, except that Si particles were used as a negative electrode active material.

<Comparative Example 2>

A test cell was produced in the same manner as in Example 1, except that only Si particles were dispersed in a PC solvent to prepare a slurry, and that the slurry was added to activated carbon so that the ratio of the volume of Si to the total pore volume of the activated carbon was 50%.

<Comparative Example 3>

A test cell was produced in the same manner as in Example 1, except that only Si particles were dispersed in a PC solvent to prepare a slurry.

[Charge-Discharge Cycle Test]

The test cell in each of Examples and Comparative Examples was charged at a constant current of 0.3 C under a temperature environment of 25°C until the battery voltage reached 4.2 V, and then charged at a constant voltage of 4.2 V until the current value reached 0.05 C. Then, the battery was discharged at a constant current of 0.5 C until the battery voltage reached 2.5 V This cycle was repeated 300 times, and the capacity maintenance rate after 300 cycles was calculated with the following formula. A higher capacity maintenance rate indicates larger suppression of deterioration of the charge-discharge cycle characteristics.

$$\text{Capacity maintenance rate (\%)} = (\text{discharge capacity at 300th cycle/discharge capacity at 1st cycle}) \times 100$$

[Evaluation of Negative Electrode Swelling Rate]

The test cell in each of Examples and Comparative Examples was charged at a constant current of 0.3 C under a temperature environment of 25°C until the battery voltage reached 4.2 V, and then charged at a constant voltage of 4.2 V until the current value reached 0.05 C. The test cell after the charge was disassembled, the negative electrode was taken out, and the thickness of the negative electrode was measured (the thickness of the negative electrode after the charge was measured). Then, the thickness of the negative electrode at production of the negative electrode and the thickness of the negative electrode after the charge were applied to the following formula to calculate the negative electrode swelling rate.

$$\text{Negative electrode swelling rate (\%)} = (\text{thickness of negative electrode after charge/thickness of negative electrode at production of negative electrode}) \times 100$$

Table 1 summarizes the results of the negative electrode swelling rate and the capacity maintenance rate in each of Examples and Comparative Examples.

[Table 1]

| | Si particles | | Activated carbon | | Conductive agent | | Battery evaluation results | |
|---|---|---|---|---|---|---|---|---|
| | Raw material | Carbon film | Si volume ratio vs activated carbon total pore volume | Carbon coating | Kind | Amount of agent added | Negative electrode swelling rate | Capacity maintenance rate at 300th cycle |
| Example 1 | | Absent | 33% | Absent | AB | 0.5% | 130% | 90% |
| Example 2 | | Present | 33% | Absent | AB | 0.5% | 130% | 92% |
| Example 3 | | Present | 33% | Absent | SWCNT | 0.01% | 130% | 94% |
| Example 4 | | Present | 33% | Present | SWCNT | 0.01% | 130% | 95% |
| Comparative Example 1 | | Absent | | | | | 300% | 25% (Capacity maintenance rate at 50th cycle) |
| Comparative Example 2 | | Absent | 50% | Absent | Absent | | 200% | 30% (Capacity maintenance rate at 50th cycle) |
| Comparative Example 3 | | Absent | 33% | Absent | Absent | - | 130% | 33% (Capacity maintenance rate at 50th cycle) |

EP 4 286 328 A1

In Examples with a negative electrode active material in which the Si-based material and the conductive agent were supported in pores of the activated carbon, the negative electrode swelling rate was lower and the capacity maintenance rate was higher than in Comparative Example 1 in which only the Si-based material was used as a negative electrode active material. Therefore, it can be said that use of a negative electrode active material in which a Si-based material and a conductive agent are supported in pores of activated carbon can suppress swelling of the negative electrode and deterioration of charge-discharge cycle characteristics.

REFERENCE SIGNS LIST

| | |
|---|---|
| 10 | Secondary battery |
| 11 | Positive electrode |
| 12 | Negative electrode |
| 13 | Separator |
| 14 | Electrode assembly |
| 15 | Battery case |
| 16 | Case body |
| 17 | Sealing assembly |
| 18, 19 | Insulating plate |
| 20 | Positive electrode lead |
| 21 | Negative electrode lead |
| 22 | Projecting portion |
| 23 | Filter |
| 24 | Lower vent member |
| 25 | Insulating member |
| 26 | Upper vent member |
| 27 | Cap |
| 28 | Gasket |

**Claims**

1. A negative electrode active material for secondary batteries, the negative electrode active material comprising: a Si-based material; activated carbon; and a conductive agent, wherein
   the Si-based material and the conductive agent are supported in pores of the activated carbon.

2. The negative electrode active material for secondary batteries according to claim 1, wherein the activated carbon has macropores having an average pore size of greater than or equal to 1 $\mu$m and less than or equal to 2 $\mu$m, and has a macropore volume of greater than or equal to 1.0 mL/g and less than or equal to 2.1 mL/g, the macropore volume measured by mercury intrusion porosimetry.

3. The negative electrode active material for secondary batteries according to claim 1 or 2, wherein a ratio of a volume of the Si-based material to a total pore volume of the activated carbon is greater than or equal to 20% and less than or equal to 40%.

4. The negative electrode active material for secondary batteries according to any one of claims 1 to 3, wherein a carbon film is formed on a surface of the Si-based material.

5. The negative electrode active material for secondary batteries according to any one of claims 1 to 4, wherein the conductive agent includes a single-walled carbon nanotube.

6. The negative electrode active material for secondary batteries according to any one of claims 1 to 5, wherein a carbon film is formed on a surface of the activated carbon.

7. A secondary battery comprising a negative electrode including the negative electrode active material for secondary batteries according to any one of claims 1 to 6.

# Figure 1

<div align="center">

**INTERNATIONAL SEARCH REPORT**

</div>

| International application No. |
| --- |
| **PCT/JP2022/002484** |

| A. | CLASSIFICATION OF SUBJECT MATTER |
| --- | --- |

*C01B 33/02*(2006.01)i; *H01M 4/36*(2006.01)i; *H01M 4/38*(2006.01)i
FI:     H01M4/38 Z; H01M4/36 B; H01M4/36 C; C01B33/02

According to International Patent Classification (IPC) or to both national classification and IPC

| B. | FIELDS SEARCHED |
| --- | --- |

Minimum documentation searched (classification system followed by classification symbols)

C01B33/02; H01M4/36; H01M4/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 5647366 B1 (GL MATERIALS INC.) 24 December 2014 (2014-12-24)<br>    fig. 1, paragraphs [0024]-[0034] | 1-7 |
| Y | WO 2014/207921 A1 (HITACHI, LTD.) 31 December 2014 (2014-12-31)<br>    paragraph [0049] | 1-7 |
| Y | JP 2011-18575 A (MIE UNIV.) 27 January 2011 (2011-01-27)<br>    paragraph [0010] | 4-7 |
| A | | 1-3 |
| Y | JP 2005-228730 A (ASAHI KASEI ELECTRONICS CO., LTD.) 25 August 2005<br>(2005-08-25)<br>    paragraph [0010] | 6-7 |
| A | | 1-5 |
| A | WO 2020/196610 A1 (SHOWA DENKO KK) 01 October 2020 (2020-10-01)<br>    paragraphs [0022], [0028]-[0030], [0054] | 1-7 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 March 2022** | **12 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/002484**

**C.    DOCUMENTS CONSIDERED TO BE RELEVANT**

| Category* | Citation of document, with indication, where appropriate, of the relevant passages | Relevant to claim No. |
|---|---|---|
| A | JP 2003-100284 A (HITACHI, LTD.) 04 April 2003 (2003-04-04)<br>paragraph [0022] | 1-7 |

**INTERNATIONAL SEARCH REPORT**
Information on patent family members

International application No.

**PCT/JP2022/002484**

| Patent document cited in search report | | | Publication date (day/month/year) | Patent family member(s) | | Publication date (day/month/year) |
|---|---|---|---|---|---|---|
| JP | 5647366 | B1 | 24 December 2014 | (Family: none) | | |
| WO | 2014/207921 | A1 | 31 December 2014 | (Family: none) | | |
| JP | 2011-18575 | A | 27 January 2011 | (Family: none) | | |
| JP | 2005-228730 | A | 25 August 2005 | (Family: none) | | |
| WO | 2020/196610 | A1 | 01 October 2020 | TW | 202103358 A | |
| JP | 2003-100284 | A | 04 April 2003 | (Family: none) | | |

Form PCT/ISA/210 (patent family annex) (January 2015)

**REFERENCES CITED IN THE DESCRIPTION**

**Patent documents cited in the description**

- JP 2019536234 A